# EUROPÄISCHE PATENTSCHRIFT

(11) **EP 1 812 989 B1**
(45) Veröffentlichungstag und Bekanntmachung des Hinweises auf die Patenterteilung: **24.12.2008**
(21) Anmeldenummer: 05795053.7
(22) Anmeldetag: 14.10.2005
(51) Int. Cl.: H01Q 1/42, B29C 45/16

(54) **STRAHLUNGSDURCHLÄSSIGE KUNSTSTOFF-ABDECKUNG UND VERFAHREN ZUM HERSTELLEN EINER KUNSTSTOFF-ABDECKUNG**
RADIATION-TRANSPARENT PLASTIC COVER AND METHOD OF MAKING A PLASTIC COVER
PROTECTION EN MATIERE PLASTIQUE TRANSPARENTE AU RAYONNEMENT ET PROCEDE DE FABRICATION D'UNE PROTECTION EN MATIERE PLASTIQUE

(30) Priorität: 15.10.2004 DE 102004050501
(43) Veröffentlichungstag der Anmeldung: 01.08.2007
(73) Patentinhaber: Freeglass GmbH & Co. Kg, 71409 Schwaikheim (DE)
(72) Erfinder: EHMANN, Alfred, 73035 Bartenbach (DE); FLEISCHMANN, Wolfgang, 71397 Leutenbach (DE); KAYSER, Steffen, 73773 Aichwald (DE); BUTSCH, Erwin, 71364 Winnenden (DE)
(74) Vertreter: Lendvai, Tomas
(86) Internationale Anmeldenummer: PCT/EP2005/011137
(87) Internationale Veröffentlichungsnummer: WO 2006/042725

(56) Entgegenhaltungen:
- EP-A- 0 465 356
- DE-A1- 19 819 709
- DE-A1-0102004 021 63
- US-A1- 2004 125 023
- US-B1- 6 328 358
- PATENT ABSTRACTS OF JAPAN Bd. 2003, Nr. 12, 5. Dezember 2003 (2003-12-05) -& JP 2003 252137 A (TOYODA GOSEI CO LTD), 10. September 2003 (2003-09-10)
- PATENT ABSTRACTS OF JAPAN Bd. 012, Nr. 384 (M-753), 13. Oktober 1988 (1988-10-13) -& JP 63 135214 A (HASHIMOTO FORMING CO LTD), 7. Juni 1988 (1988-06-07) -& DATABASE WPI Section Ch, Week 198828 Derwent Publications Ltd., London, GB; Class A32, AN 1988-195766 XP002362670 & JP 63 135214 A (HASHIMOTO FORMING KOGYO CO) 7. Juni 1988 (1988-06-07)
- PATENT ABSTRACTS OF JAPAN Bd. 2000, Nr. 15, 6. April 2001 (2001-04-06) -& JP 2000 344032 A (NISSAN MOTOR CO LTD), 12. Dezember 2000 (2000-12-12) -& DATABASE WPI Section PQ, Week 200113 Derwent Publications Ltd., London, GB; Class Q17, AN 2001-118921 XP002362671 & JP 2000 344032 A (NISSAN MOTOR CO LTD) 12. Dezember 2000 (2000-12-12)

## Beschreibung

Die Erfindung bezieht sich auf eine Abdeckung aus Kunststoff mit den Merkmalen des Oberbegriffs des Patentanspruchs 1, welche als Einsatz in Öffnungen von Fahrzeugkarosserien und insbesondere in einem Kühlergrill vorgesehen ist, um eine Einrichtung zur Abstandsmessung abzudecken. Die Erfindung bezieht sich auch auf Verfahren zum Herstellen einer solchen Abdeckung.

US 6,328,358 B1 beschreibt eine Abdeckung (auch Radom genannt) mit den Gattungsmerkmalen. Diese besteht im Wesentlichen aus einem mehrlagigen Kunststoffteil mit einer durchsichtigen ersten und einer undurchsichtigen zweiten Schicht. Letztere wird als Maske aufgebracht, die bestimmte Teilflächen der durchsichtigen Schicht nicht bedeckt, und dient als Substrat zum vollflächigen Abscheiden einer äußerst dünnen metallischen Schicht. In den besagten freigelassenen Teilflächen ist oder bleibt die metallische Schicht als Muster, Dekor oder dgl. sichtbar. Eine abschließend hierüber aufgebrachte Deckschicht, die auf der metallischen Schicht bzw. auf einer zu deren Schutz aufgebrachten Schutzschicht nicht gut haftet, muss durch mechanische Verankerung an dem Kunststoffteil fixiert werden.

Bekannt ist auch eine solche Abdeckung, die bei bestimmten Fahrzeugen des Herstellers DaimlerChrysler eingesetzt wurde (Limousinen und Roadster), welche über eine radargestützte Abstandswameinrichtung verfügen. Der Radarsensor wird in der Fahrzeugfront direkt vor dem Fahrzeugkühler eingebaut. Die besagte Abdeckung überdeckt den Radarsensor und ist in der Kühlerverkleidung integriert. Die Radarkeule des Sensors strahlt direkt durch die Abdeckung, die optisch möglichst unauffällig gestaltet sein muss.

Im einzelnen verlangt dies die Anpassung an den Stil oder das Design der Kühlerverkleidung, hohe Oberflächengüte, hohe Widerstandsfähigkeit gegen Steinschlag u.ä. sowie geringe und definierte Dämpfung der Radarstrahlung, letzteres insbesondere im Hinblick auf eine sehr zuverlässige und sichere Arbeitsweise der Abstandswameinrichtung.

Die bekannte Abdeckung besteht zweiteilig aus Kunststoff. Ihre transparente Frontplatte wird aus Polycarbonat durch Spritzen hergestellt. Die lokale Topographie der Kühlerverkleidung ist als Relief in ihrer rückseitigen Oberfläche eingelassen. Je nach Fahrzeugtyp ist dies das Gitter des Kühlergrills (Limousinen) oder ein Firmenzeichen (bei den erwähnten Roadstern z. B. der bekannte dreizackige Stern des Herstellers DaimlerChrysler).

Die Rückseite der Frontplatte ist schwarz lackiert, wobei das erwähnte Muster maskiert wurde und somit lackfrei ist.

Dieser Muster-Bereich wird metallisiert. Durch Zusammenwirken von Lackierung und kontrastierender Metallisierung wird in der Frontplatte das dreidimensionale, metallische Kühlergitter bzw. das Firmenzeichen optisch nachgeahmt und fügt sich in die optische Erscheinung der Einbauumgebung ein. Eine andere Variante stellt das Muster durch eine teil-metallisierte Prägefolie dar.

Die so vorbereitete Frontplatte wird nun wieder in ein Spritzgusswerkzeug eingelegt und mit einem schwarzem Acrylnitril/Styrol/Acrylester (ASA) hinterspritzt. Die Frontplatte und die neu angespritzte schwarze Komponente bilden dabei keinen Stoffverbund.

Die Lackierung bzw. Metallisierung verhindern ein festes Verschmelzen der beiden Komponenten bzw. Spritzteile. Ihre feste mechanische Verbindung entsteht durch Hinterschnitte und Hintergreifungen während des Spritzens des ASA. Der Verbund ist deshalb nicht wasserdicht und kann durch Krafteinwirkung getrennt werden. Eindringendes Wasser kann die Radardämpfung der Abdeckung unerwünscht erhöhen. Außerdem kommt es zu "thermischem Atmen", d. h. Relativbewegungen zwischen den beiden Komponenten infolge unterschiedlicher Wärmedehnungskoeffizienten der Materialien. Auch diese können sich erhöhend auf die Radardämpfung auswirken.

Zum Schutz des Lackes und der Metallisierung vor der warmen Schmelze beim Hinterspritzen wird die Rückseite der Frontplatte zuvor mit einem Wärmeschutzlack beschichtet. Des weiteren werden Kanten zusätzlich mit einer PE-Folie beklebt.

Montageelemente zum Befestigen der Abdeckung werden beim Spritzen an die schwarze Komponente angeformt. Schließlich wird die Außenfläche der Abdeckung zum Schutz vor UV-Strahlung und mechanischer Beschädigungen in der üblichen Weise mit einem Polysiloxan-Hardcoat beschichtet. Dies ist z. B. bei Kunststoff-Lampenabdeckungen üblich.

Da eindringende Feuchtigkeit zu Korrosion der Metallisierung und zu Veränderungen der Radar-Transmissionseigenschaften der Abdeckung führen könnte, werden Fugen des ASA-PC-Verbundes mit einer Polyurethan-(PU-)Dichtungsmasse abgedichtet.

Der grundsätzliche Aufbau der vorstehend beschriebenen Ausführung ist im Patent DE 198 19 709 C2 beschrieben. Dort wird auch erwähnt, dass die gespritzte transparente Frontplatte zunächst mit einem opaken Lack beschichtet wird. Nach dem Aufbringen des Musters durch Teil-Metallisierung wird dann eine dunkel gefärbte Polycarbonatschicht aufgespritzt oder eine Polycarbonat-Platte formschlüssig aufgeklebt.

Es wurde schon vorgeschlagen (ältere Patentanmeldung DE 10 2004 021 630.4), das sichtbare Muster (Kühlergitter, Firmenzeichen) als gesondertes, ggf. farblich kontrastiertes Einlegeteil zu fertigen, das in das transparente Kunststoffteil eingelegt wird. Danach wird diese Baugruppe mit einem weiteren Kunststoffbauteil hinterspritzt, dessen Material sich flächig haftend mit dem transparenten Material verbindet. Das Einlegeteil wird vollständig umschlossen.

Der Erfindung liegt die Aufgabe zu Grunde, noch eine weitere, kostengünstig herstellbare Abdeckung der genannten Art zu schaffen und ein Verfahren zu deren Herstellung anzugeben.

Diese Aufgabe wird erfindungsgemäß mit den Merkmalen des Patentanspruchs 1 hinsichtlich der Abdeckung gelöst. Anspruch 15 gibt ein entsprechendes Herstellungsverfahren an.

Die Merkmale der den unabhängigen Ansprüchen jeweils nachgeordneten Unteransprüche geben vorteilhafte Weiterbildungen dieser Erfindung an.

Ein grundsätzlicher Unterschied der erfindungsgemäßen Abdeckung zur vorbekannten Lösung ist darin zu sehen, dass ein (vorzugsweise opaker) Kunststoffkörper unter Freilassen der für das sichtbare Muster benötigten Teilfläche an den frontseitigen transparenten Körper angespritzt wird, statt ihn nach Entformung außerhalb seiner Spritzform partiell (unter Verwendung einer Maske oder dgl.) opak zu lackieren. Dieser Kunststoffkörper erfüllt den Zweck einer Versiegelung der Rückseite des transparenten Körpers sowohl gegen mechanische Beschädigungen als auch gegen unabsichtliche Farb- oder sonstige Verschmutzungen.

Der opake Körper kann als dünne Schicht ausgeführt sein, oder auch bereits die endgültige Rückseite der transparenten Abdeckung mit Ausnahme der für das Muster vorgesehenen Flächen bilden. Im folgenden wird der Körper stets als Schicht bezeichnet, ohne jedoch die vorstehende Variante ausschließen zu wollen.

Ganz bevorzugt wird man das Hinterspritzen in einer Zweikomponenten-Spritzgießvorrichtung ausführen. Als erste Komponente wird darin das transparente Bauteil gespritzt, wobei auf einer Seite ein Relief für das Muster geformt werden kann. Seine im Einbauzustand außen liegende Sichtfläche kann glatt oder ebenfalls mit einer Oberflächenstruktur versehen sein.

Ohne das Bauteil aus seiner Ursprungsform zu entnehmen, wird auf der für das Muster vorgesehenen Seite in an sich bekannter Weise eine erweiterte Kavität (Wechsel einer Formhälfte) angeordnet, in welche die weitere Kunststoffschicht, vorzugsweise aus Polycarbonat (PC) oder Polymethyl-Methacrylat (PMMA), eingespritzt wird. Hierdurch lässt sich eine erhebliche Verkürzung des Produktionszyklus erreichen, und das Beschädigungs- und Verschmutzungsrisiko minimieren. Eine hervorragende Bauteil-Qualität wird damit gesichert.

Besagte Formhälfte definiert dabei zugleich unmittelbar und mit vorzüglicher Trennschärfe diejenige Oberfläche auf dem transparenten Bauteil, an die das weitere Material angespritzt wird, so dass es keiner gesonderten Maskierung im Bereich des Musters bedarf. Wenn das Muster auf dem transparenten Körper in dreidimensionaler Reliefform vorliegt, so kann ein entsprechender Negativ- oder Positiv-Formabschnitt der Hinterspritzungs-Formhälfte in dieses Relief eingeführt werden.

Das Zweikomponenten-Verfahren kann vorteilhaft in einer Wendeform ausgeführt werden. Auch dieses Teil-Entformen und Ergänzen eines anderen Formteilstücks ist im vorliegenden Kontext als "Formwechsel" zu verstehen. Derartige Verfahren sind aber an sich bekannt, so dass hier nicht näher darauf eingegangen werden muss.

Das flächig (opak) hinterspritzte transparente Formteil wird aus der Form entnommen. Zumindest (und vorzugsweise nur) auf den nicht opak hinterspritzten, das gewünschte Muster bildenden Teilflächen wird es mit einer Beschichtung zur farblichen Kontrastierung versehen, um das Muster optisch darzustellen.

Der nicht vom eigentlichen Muster berührte Flächenanteil bleibt vorzugsweise unbeschichtet, z. B. durch Verwenden einer geeigneten Maske. Dies geschieht weniger zum Vermeiden optischer Beeinträchtigung als vielmehr der Sicherung einer guten Adhäsion / Verschmelzung der Kunststoffschicht mit einem noch weiteren anzuspritzenden (Abschluss-)Körper.

Die Muster-Teilflächen werden vorzugsweise mit Indium oder Indium-Zinn metallisiert. Diese Beschichtung kann durch Bedampfen oder Sputtern (Kathodenzerstäubung im Vakuum) aufgebracht werden. Das Muster kann aber auch mit anderen Mitteln, z. B. (Spritz-) Lackierung, dargestellt werden.

Das Muster kann wiederum z. B. ein Stück Kühlergitter, ein Stück eines Firmenzeichens oder Typkennzeichens oder dgl. oder auch ein vollständiges Firmen- oder Typkennzeichen darstellen.

Es wäre auch alternativ denkbar, zur Darstellung des Musters statt einer Beschichtung oder Lackierung noch ein weiteres, farblich kontrastierendes Material wie PC oder PMMA an die entsprechenden Stellen anzuspritzen, wenn an die optische Brillanz des von außen sichtbaren Musters keine allzu hohen Anforderungen gestellt werden.

Als weitere Alternative oder Ausgestaltung könnte das Muster aus einem nachleuchtenden Material oder aus einem mit nachleuchtenden Partikeln versetzten transparenten Matrix-Material hergestellt werden, das von auftreffendem Licht zum Abgeben von Licht angeregt werden kann und damit jedenfalls bei Nacht einen zusätzlichen Kontrasteffekt erzeugt.

Im nächsten und letzten Formgebungs-Schritt wird die halbfertige, mit dem kontrastierenden teilflächigen Muster versehene und im weiteren mit opakem Kunststoff hinterspritzte Abdeckung in einem weiteren Spritzvorgang, ggf. wieder in der Urform des transparenten Bauteils und einer dritten zusätzlichen Formhälfte, flächig mit undurchsichtigem dunklem, bevorzugt schwarzem Kunststoff, vorzugsweise wiederum PC oder PMMA, hinterspritzt.

Der so gebildete rückseitige Körper muss allerdings nicht unbedingt die gesamte Fläche der zuvor angespritzten Kunststoffschicht bzw. die gesamte Rückseite der Abdeckung überdecken, sondern kann sich auf den Bereich des Musters nebst bestimmten Flächen unmittelbar neben dem Muster konzentrieren, denn er hat letztlich die Hauptfunktion, das Muster hermetisch zu versiegeln. Die Undurchsichtigkeit der Abdeckung wird ja bereits durch die vollflächige opake Kunststoffschicht bzw. den entsprechenden Körper erreicht.

Mit dem rückwärtigen Kunststoffkörper werden vorzugsweise auch Montageelemente zum Festlegen der Abdeckung in der Fahrzeugumgebung einstückig angeformt. Es wäre jedoch auch möglich, die Befestigungselemente an die transparente Abdeckung anzuspritzen oder sie gemeinsam mit der Kunststoffschicht zu formen. Schließlich können grundsätzlich auch separate Befestigungselemente verwendet werden.

Die zuvor angespritzte Schicht und die dunkle Komponente verschmelzen hierbei unlösbar miteinander und bilden einen wasserdichten Verbund. Darin ist das Muster eingeschlossen, wobei es durch die transparente Komponente hindurch sichtbar bleibt und seine metallisierte Oberfläche durch Kontrast zu der undurchsichtigen (dunklen) zweiten Komponente gut sichtbar bleibt. Zugleich ist die Metallisierung unmittelbar nach dem Spritzen hermetisch gegen korrosive und sonstige Einflüsse geschützt, ohne dass es weiterer Maßnahmen bedürfte.

Als weitere Option kann in einem Zwischenschritt in den Bereich des Musters ein dessen Oberflächenform entsprechendes vorgefertigtes Einlegeteil auf- oder eingelegt werden. Dieses stellt eine "Positivform" des Musters dar und muss farblich nicht kontrastieren, insbesondere nicht metallisiert sein. Es schützt jedoch bei Bedarf die Metallisierungs- oder Lackschicht des Musters vor der direkten Einwirkung der heißen nachträglich angespritzten Kunststoffschmelze. Auch dieses Einlegeteil besteht vorzugsweise aus hochwärmefestem PC oder PMMA, so dass es dem Hinterspritz-Vorgang ohne Verformung widersteht. Selbstverständlich muss es auch mechanisch in der Form fixiert werden.

Auf den metallisierten Muster-Teilflächen des transparenten Bauteils wird das angespritzte Deck-Material nicht oder nur schwach haften. Jedoch nehmen diese in Bezug auf die Gesamtfläche der Abdeckung nur eine vernachlässigbar kleine Fläche ein.

Abschließend kann die transparente Sichtfläche der Abdeckung zum Schutz vor UV-Strahlung und mechanischer Beschädigung in bekannter Weise mit einer geeigneten Filter- und Hartbeschichtung (z. B. Polysiloxan-Hardcoat) beschichtet werden.

Bei Bedarf bzw. bei entsprechenden Designanforderungen können an die fertige Abdeckung noch weitere Teile angebracht werden, z. B. verchromte Zierelemente und dgl. Ferner kann die Abdeckung bzw. deren sichtbare Außenfläche grundsätzlich auch noch mit Farbelementen, z. B. einer Bedruckung oder dgl., versehen werden.

Weitere Einzelheiten und Vorteile des Gegenstands der Erfindung gehen aus der Zeichnung von Ausführungsbeispielen und deren sich im folgenden anschließender eingehender Beschreibung hervor.

Es zeigen in schematischer, nicht maßstäblicher Darstellung
- Fig. 1: die erfindungsgemäße Abdeckung von der glatten Frontseite mit dem sichtbar eingebetteten Muster;
- Fig. 2: die vollständige Abdeckung von der Rückseite nach dem Anspritzen der zweiten Flächenkomponente nebst den Befestigungselementen;
- Fig. 3: die mit einem Relief-Muster versehene Rückseite eines ersten transparenten Formteils der erfindungsgemäßen Abdeckung;
- Fig. 4: einen Schnitt durch ein transparentes Formteil nach dem Hinterspritzen mit einer opaken Kunststoffschicht zur Verdeutlichung eines Zwischenschritts einer partiellen Hinterspritzung und des Reliefs;
- Fig. 5: einen Schnitt analog zu Fig. 4 nach dem Einbringen eines sichtbaren Musters in den Bereich des Reliefs;
- Fig. 6: einen Schnitt analog zu Fig. 5 durch die vervollständigte Abdeckung;
- Fig. 7: einen Schnitt analog zu Fig. 6 durch eine Ausführungsvariante der Abdeckung.

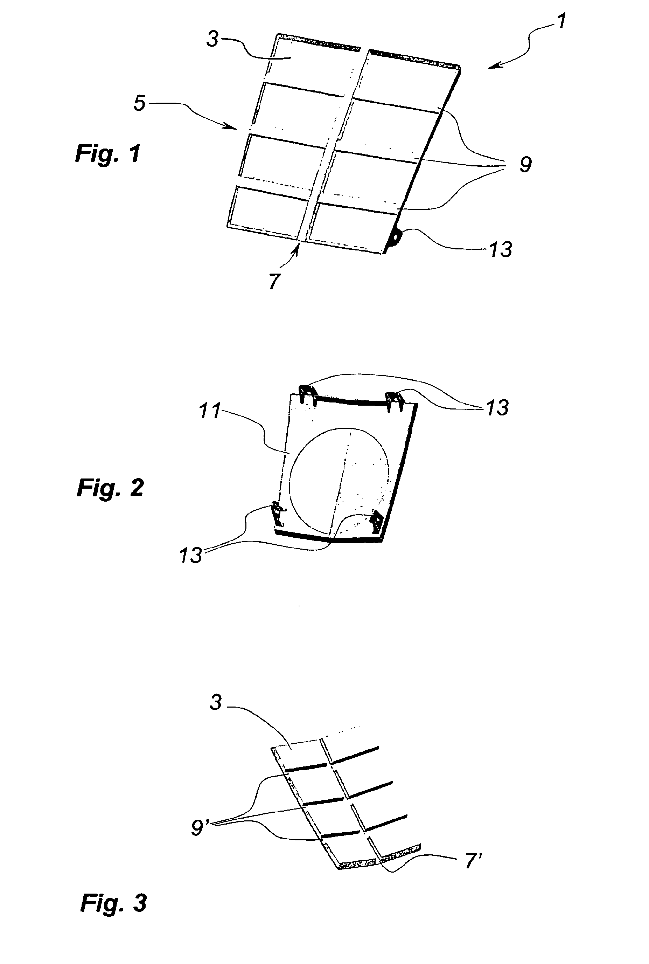

Fig. 1 zeigt eine Abdeckung 1 in Gestalt eines Teilflächen-Elements einer Kühlerverkleidung oder eines Kühlergrills. Man blickt auf eine glatte Außenfläche eines Körpers 3 aus einem transparenten Kunststoffmaterial. Es versteht sich, dass diese Außenfläche je nach Anforderung der Einbauumgebung oder des Kunden auch mit einer Oberflächenstruktur und weiteren Gestaltungselementen ausgeführt werden kann. Hinter dieser Außenfläche ist durch den Körper hindurch eine Struktur / ein Muster 5 erkennbar, die / das beispielsweise die optische Fortsetzung einer entsprechenden Gestaltung der späteren Einbauumgebung bildet und sich darin harmonisch und unauffällig einfügt.

In diesem Beispiel umfasst das Muster 5 einen Mittelsteg 7 und davon quer abragende Rippen 9 eines stilisierten Kühlergrills.

Die Rückseite der fertigen Abdeckung 1 ist, wie Fig. 2 veranschaulicht, von einem weiteren Körper 11 aus einem opaken (dunklen, schwarzen) Material gebildet, das durch ganzflächiges Hinterspritzen des Körpers 3 zugeführt wird. Das Muster 5 ist von der Rückseite her nicht sichtbar.

In diesem Beispielfall erstreckt sich das Muster 5 praktisch über die gesamte Fläche des Körpers 3. So erscheint es zweckmäßig, den Körper 11 ebenfalls ganzflächig und nicht nur als Abdeckung des Musters 5 und der direkt daran angrenzenden Flächen auszuführen. Insbesondere bei einem im Verhältnis zur Fläche der Abdeckung 1 eher kleinflächigen Motiv des Musters wäre aber auch eine nicht-ganzflächige Ausführung des Körpers 11 denkbar.

In Fig. 2 erkennt man ferner Befestigungselemente 13, mit denen die Abdeckung 1 in der Einbauumgebung festgelegt wird. Diese können vorzugsweise und vorteilhaft einstückig mit dem Körper 11 gespritzt werden.

Die Abdeckung 1 bildet einen für Radarstrahlen durchlässige Teilfläche einer Fahrzeugkarosserie, die hier nicht weiter gezeigt wird. Dahinter wird sich im Einbauzustand ein Radarsensor befinden.

Man erkennt in ihrer Rückseitenfläche (Fig. 2) einen kreisförmigen Umriss. Dieser umschreibt eine Durchtrittsfläche für die Radarstrahlen. Während die restliche Rückseite der Abdeckung ein Offset der vorderen Oberfläche darstellt, um dem Bauteil ein gefälliges Aussehen zu geben, wird die Teilgeometrie in der Durchtrittsfläche auf die Strahlrichtung des Sensors optimiert. Über die Tiefe des entsprechenden Form-Einsatzes kann der optimale Betriebspunkt (geringste Dämpfung) der Platte eingestellt werden, ggf. auch eine Linsenwirkung der Abdeckung / des Radoms. Diese Einstellung erfolgt einmalig und kann für die weitere Verwendung der Spritzform beibehalten werden.

**Fig. 3** zeigt der Verdeutlichung halber eine gesonderte perspektivische Rückansicht des transparenten Körpers 3 der Abdeckung in einem Zwischenstadium von deren Formgebung. Dieser Körper 3 bildet, wie schon erwähnt, die Außenfläche der Abdeckung und ist im Wesentlichen flächig und platten- oder scheibenartig.

In der Rückansicht erkennt man eine dem in Fig. 1 sichtbaren Muster 5 entsprechende Reliefstruktur. Mit 7' ist der Mittelsteg und mit 9' sind die Rippen bezeichnet. Diese Reliefstruktur wird beim Spritzen des Körpers 3 in einem ersten Spritzvorgang erzeugt.

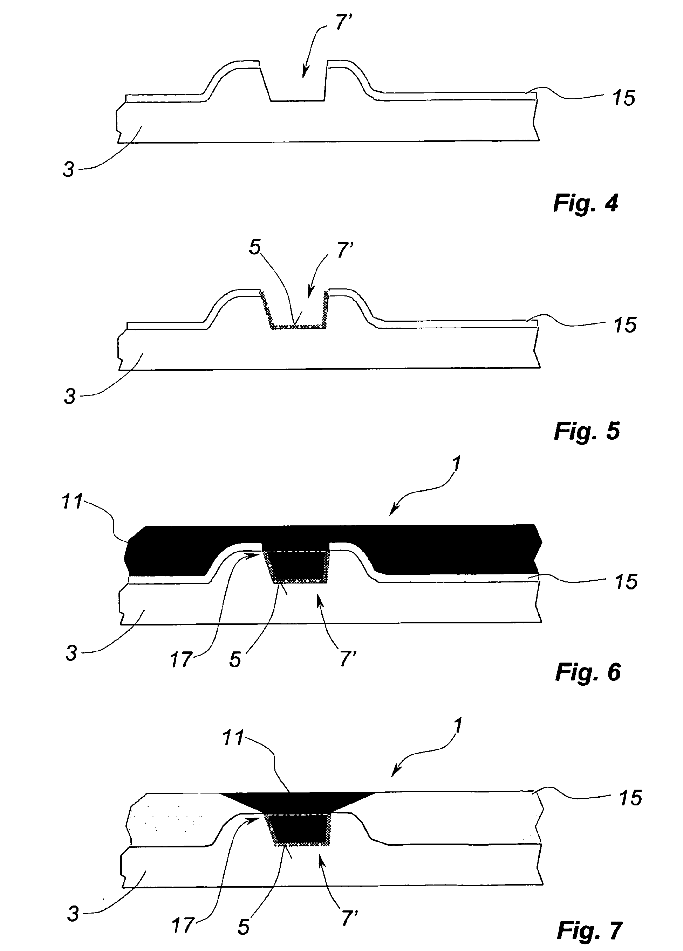

Nach einem Zwischen-Spritzschritt sieht die Rückseite der Abdeckung wie in **Fig. 4** schematisch im Teil-Querschnitt dargestellt aus. Der Körper 3 wurde, mit Ausnahme der Rille 7' des Muster-Reliefs, mit einer undurchsichtigen, vorzugsweise dunklen / schwarzen Masse 15 oder Schicht flächig hinterspritzt. Es kommt dabei wesentlich darauf an, mit der Schicht als Maske eine gute Trennschärfe zwischen den Flächen des Musters auf dem transparenten Körper und dessen daran angrenzenden Flächen zu erreichen. Jegliche Unschärfe oder Fehlstelle würde beim fertigen Bauteil als unsaubere Kante des Musters deutlich wahrnehmbar. Indem diese Schicht im Zweikomponenten-Spritzverfahren aufgebracht wird, kann die zugehörige Formhälfte bzw. Kavität zugleich zur Maskierung des Muster-Reliefs 7' verwendet werden, ohne dass es einer gesonderten Maskierung noch bedürfte.

In der Ansicht von Fig. 3 werden also nur die glatten Flächen neben den Relief-Rillen 5' bzw. 7' mit der opaken Masse 15 hinterspritzt.

**Fig. 5** zeigt den nächsten Schritt, in dem das Muster 5 in Gestalt einer farbig kontrastierenden Beschichtung (Metallisierung) in den Bereich des Muster-Reliefs eingebracht wurde, ohne allerdings die Kunststoff-Masse 15 zu beschichten. Man erkennt, dass nicht nur der Boden, sondern auch die Seitenwände der Rille 7' beschichtet wurde. Dadurch entsteht bei Betrachtung von außen eine dreidimensionale Wirkung.

Diese Muster-Beschichtung wird real sehr viel dünner sein als hier gezeichnet werden kann. Nach diesem Schritt sieht die Abdeckung 1 von ihrer Frontseite her schon so aus wie in Fig. 1 dargestellt. Die lokale dünne Metallisierung bildet keine nennenswerte Dämpfung für die Strahlung; abgesehen davon nimmt das Muster 5 nur einen verhältnismäßig geringen Teil der Gesamtfläche der Abdeckung 1 ein.

Schließlich zeigt **Fig. 6** einen Schnitt durch die fertige Abdeckung, die durch einen weiteren Spritzvorgang noch um den rückseitigen Körper 11 ergänzt wurde, so wie sie auch in Fig. 2 dargestellt ist. Man erkennt, dass das Muster 5 hermetisch zwischen den Körpern 3 und 11 eingeschlossen ist, wobei es von außen durch die transparente Masse des Körpers 3 sichtbar bleibt.

Mit einer weißen waagerechten strichpunktierten Linie 17 in der Rille 7' und dem in diese hineinragenden Teil des Körpers 11 ist angedeutet, dass vor dem Anspritzen des Körpers 11 in die Rille ein weiterer passend vorgeformter Einsatzkörper eingelegt werden könnte, welcher die das Muster 5 bildende Beschichtung gegen den eingespritzten Kunststoff des Körpers 11 abdecken kann.

In **Fig. 7** ist in einer Variante der Abdeckung schon die Masse 15 als relativ dicker Körper in gleicher Funktion wie der Körper 11 in Fig. 6 ausgeführt. Lediglich der Bereich des Musters 5 wurde davon ausgespart, damit dieses nach dem Anspritzen der Masse 15 eingebracht werden kann; erkennbar sind die Kanten der Masse 15 wieder bis exakt an die Ränder der Rille 7' heran geführt, um ihre Maskenfunktion zu gewährleisten.

Der Körper 11 bildet in dieser Variante an sich nur noch eine Versiegelung des Musterbereiches. Auch in dieser Variante kann wieder -wie durch die strichpunktierte weiße Linie angedeutet- in die Rille 7' ein Einsatz 17 eingelegt werden.

Abschließend sei angemerkt, dass anstelle der hier gezeigten Muster-Beschichtung auch eine farblich kontrastierende Kunststoffmasse in die Rille 7' eingespritzt werden könnte, wobei in einer Variante die Linie 17 etwa deren obere Kante darstellen würde.

In einer anderen Variante könnte diese Kunststoffmasse außer der Beschichtung auch das gesamte Volumen des Körpers 11 einnehmen, wenn eine farbliche Inhomogenität an der Rückseite der Abdeckung hingenommen werden kann.

Dies gilt natürlich auch für die Ausführung gemäß Fig. 6. Sieht man dort anstelle einer gesonderten Beschichtung zum Darstellen des Musters eine farblich kontrastierende angespritzte Kunststoffmasse vor, so kann diese das gesamte Volumen des Körpers 11 einnehmen. Die Masse 15 lässt die Farbe der Kunststoffmasse nur im Bereich des Musters durchscheinen.

Auch in diesen Ausführungsvarianten ist der Bereich des Musters jeweils von der angespritzten Kunststoffmasse überdeckt.

## Patentansprüche

1. Kunststoff-Abdeckung (1) für Öffnungen in Fahrzeug-Karosserien, die einen Körper (3) aus durchsichtigem Kunststoff mit einer Außenfläche aufweist, durch welche Außenfläche ein farblich kontrastierendes Muster (5) sichtbar ist, das auf einer der Außenfläche gegenüber liegenden Rückfläche des Körpers (3) angebracht ist, **dadurch gekennzeichnet, dass** die Rückseite des durch Spritzen geformten transparenten Körpers (3) teilflächig oder ganzflächig, jedoch unter Aussparung der für das Muster (5) vorgesehenen Fläche, mit einer Kunststoffmasse (15) hinterspritzt ist, und dass ein den Bereich des Musters (5) nach dessen Anbringen abdeckender weiterer Kunststoffkörper (11) durch Anspritzen des diesen bildenden Kunststoffmaterials mit dem von der Kunststoffmasse (15) gebildeten Körper fest verbunden ist.

2. Abdeckung nach Anspruch 1, **dadurch gekennzeichnet, dass** die Kunststoffmasse (15) als Schicht an den transparenten Körper angespritzt ist und dass der weitere Kunststoffkörper (11) das Muster und mindestens Teilbereiche der Schicht überdeckt.

3. Abdeckung nach Anspruch 1 oder 2, **dadurch gekennzeichnet, dass** das Muster (5) durch Beschichten von Teilflächen des transparenten Körpers (3) vor dem Anspritzen des weiteren Kunststoffkörpers (11) erzeugt ist.

4. Abdeckung nach einem der vorstehenden Ansprüche, **dadurch gekennzeichnet, dass** zwischen dem Muster (5) und dem angespritzten weiteren Kunststoffkörper (11) ein das Muster überdeckender Einsatz (17) eingepasst ist.

5. Abdeckung nach Anspruch 1 oder 2, **dadurch gekennzeichnet, dass** das farblich kontrastierende Muster (5) durch lokales Anspritzen einer Kunststoffmasse an den transparenten Körper erzeugt ist.

6. Abdeckung nach einem der vorstehenden Ansprüche, **dadurch gekennzeichnet, dass** die Kunststoffmasse (15) undurchsichtig ist.

7. Abdeckung nach einem der vorstehenden Ansprüche, **dadurch gekennzeichnet, dass** die Rückseite des transparenten Körpers (3) im Bereich des Musters (5) mit einem Relief (7', 9') versehen ist.

8. Abdeckung nach einem der vorstehenden Ansprüche, deren Muster (5) zumindest einen Bestandteil eines Firmenzeichens oder Typkennzeichens bildet.

9. Abdeckung nach einem der vorstehenden Ansprüche, **dadurch gekennzeichnet, dass** an einen der die Abdeckung bildenden Kunststoffkörper (11) Befestigungselemente (13) zum Festlegen der Abdeckung in ihrer Einbauumgebung angespritzt sind.

10. Abdeckung nach einem der vorstehenden Ansprüche, deren Außenfläche (11) entsprechend den Anforderungen der Einbauumgebung glatt oder mit einer Reliefstruktur ausgeführt ist.

11. Abdeckung nach einem der vorstehenden Ansprüche, deren Außenfläche (11) mit einer Schutzbeschichtung, insbesondere einer Hartbeschichtung aus Polysiloxan, versehen ist.

12. Abdeckung nach einem der vorstehenden Ansprüche, **dadurch gekennzeichnet, dass** das Muster aus einem nachleuchtenden Material oder aus einem nachleuchtende Partikel enthaltenden Material hergestellt ist.

13. Abdeckung nach einem der vorstehenden Ansprüche in Gestalt eines für elektromagnetische Strahlen wie Radarstrahlen durchlässigen Radoms.

14. Abdeckung nach einem der vorstehenden Ansprüche, deren Muster ein Muster einer Kühlerverkleidung oder eines Firmenzeichens einer Standard-Ausführung der Abdeckung der besagten Öffnung teilweise oder vollständig darstellt.

15. Verfahren zum Herstellen einer Kunststoff-Abdeckung (1) für Öffnungen in Fahrzeug-Karosserien, die für elektromagnetische Strahlen wie Radarstrahlen, durchlässig ist, und einen aus durchsichtigem Kunststoff gespritzten Körper (3) mit einer Außenfläche aufweist, durch die ein Muster (5) sichtbar ist, das auf einer der Außenfläche gegenüber liegenden Rückfläche des Körpers (3) angebracht ist, und wobei ferner auf der Rückseite des transparenten Körpers (3) weiteres vorzugsweise undurchsichtiges, zum Muster (5) farblich kontrastierendes Material angebracht ist, **dadurch gekennzeichnet, dass** man die Rückseite des durch Spritzen geformten transparenten Körpers (3) teilflächig oder ganzflächig, jedoch unter Aussparung der für das Muster (5) vorgesehene Fläche, mit einer vorzugsweise undurchsichtigen Kunststoff-Masse (15) hinterspritzt, die an der Rückseite fest haftet, und dann zum Aufbringen des Musters (5) oder nach dessen Aufbringen zumindest die von diesem eingenommenen Flächen sowie daran angrenzende Flächen der vorzugsweise undurchsichtigen Kunststoff-Masse (15) mit einer weiteren Kunststoffmasse zum Bilden eines Kunststoffkörpers (11) hinterspritzt.

16. Verfahren nach Anspruch 15, **dadurch gekennzeichnet, dass** die undurchsichtige Kunststoffmasse (15) im Zweikomponenten-Spritzverfahren, insbesondere ohne vollständiges Entformen des transparenten Körpers (3), angespritzt wird.

17. Verfahren nach Anspruch 15 oder 16, **dadurch gekennzeichnet, dass** man zum Anspritzen der undurchsichtigen Kunststoffmasse (15) eine Wendeform-Spritzvorrichtung verwendet.

18. Verfahren nach einem der vorstehenden Verfahrensansprüche, **dadurch gekennzeichnet, dass** das Muster (5) durch Auftragen einer Beschichtung, insbesondere einer Metallisierung, eingebracht wird.

19. Verfahren nach einem der vorstehenden Verfahrensansprüche 15 bis 17, **dadurch gekennzeichnet, dass** das Muster durch Anspritzen einer zu dem undurchsichtigen Material (15) farblich kontrastierenden Kunststoffmasse eingebracht wird.

20. Verfahren nach Anspruch 19, bei dem das Muster (5) vor dem Hinterspritzen mit der weiteren Kunststoffmasse mit einem Einlegeteil (17) überdeckt wird.

21. Verfahren nach einem der vorstehenden Verfahrensansprüche, bei dem an die Abdeckung ferner Befestigungselemente angespritzt werden, insbesondere einstückig mit einer der die Abdeckung bildenden Kunststoffmassen.

22. Verfahren nach einem der vorstehenden Verfahrensansprüche, bei dem die Außenfläche der Abdeckung mit einer Schutzbeschichtung, insbesondere einer Hartbeschichtung aus Polysiloxan, versehen wird.

## Claims

1. Plastic cover (1) for openings in vehicle bodies, the plastic cover having a body (3) made of transparent plastic with an outer surface, through which outer surface a colour contrasting pattern (5) applied to a rear surface of the body (3) that lies opposite the outer surface is visible, **characterized in that** the rear side of the transparent body (3), which is formed by injection moulding, is partially or completely backmoulded with a plastic compound (15) by injection moulding, but with the surface provided for the pattern (5) being left free, and **in that** a further plastic body (11) which covers the region of the pattern (5) after application thereof is firmly connected to the body formed by the plastic compound (15) by injection of the plastic material forming said further plastic body.

2. Cover according to Claim 1, **characterized in that** the plastic compound (15) is injected in the form of a layer onto the transparent body, and **in that** the further plastic body (11) covers the pattern and at least partial regions of the layer.

3. Cover according to Claim 1 or 2, **characterized in that** the pattern (5) is produced by coating partial surfaces of the transparent body (3) before the further plastic body (11) is injected.

4. Cover according to one of the preceding claims, **characterized in that** an insert (17) which covers the pattern is fitted between the pattern (5) and the injected further plastic body (11).

5. Cover according to Claim 1 or 2, **characterized in that** the colour contrasting pattern (5) is produced by local injection of a plastic compound onto the transparent body.

6. Cover according to one of the preceding claims, **characterized in that** the plastic compound (15) is opaque.

7. Cover according to one of the preceding claims, **characterized in that** the rear side of the transparent body (3) is provided with a relief (7', 9') in the region of the pattern (5).

8. Cover according to one of the preceding claims, the pattern (5) of which forms at least part of a company logo or type distinguishing sign.

9. Cover according to one of the preceding claims, **characterized in that** fastening elements (13) for fixing the cover in the surroundings in which it is fitted are injected onto one of the plastic bodies (11) forming the cover.

10. Cover according to one of the preceding claims, the outer surface (11) of which is designed such that it is smooth or has a relief structure in accordance with the requirements of the surroundings in which it is fitted.

11. Cover according to one of the preceding claims, the outer surface (11) of which is provided with a protective coating, in particular a hard coating made of polysiloxane.

12. Cover according to one of the preceding claims, **characterized in that** the pattern is produced from a phosphorescent material or from a material containing phosphorescent particles.

13. Cover according to one of the preceding claims in the form of a radome which is permeable to electromagnetic beams, such as radar beams.

14. Cover according to one of the preceding claims, the pattern of which partially or completely constitutes a pattern of a radiator grill or of a company logo for a standard version of the cover of said opening.

15. Method for producing a plastic cover (1) for openings in vehicle bodies, said plastic cover being permeable to electromagnetic beams, such as radar beams, and having a body (3) which is injection moulded from transparent plastic and has an outer surface through which a pattern (5) applied to a rear surface of the body (3) that lies opposite the outer surface is visible, and wherein, furthermore, a further, preferably opaque material of contrasting colour to the pattern (5) is applied to the rear side of the transparent body (3), **characterized in that** the rear side of the transparent body (3), which is formed by injection moulding, is partly or completely backmoulded with a preferably opaque plastic compound (15), which sticks firmly to the rear side, by injection moulding, but with the surface provided for the pattern (5) being left free, and then, in order to apply the pattern (5) or after application thereof, at least the surfaces occupied by it and surfaces, which are adjacent thereto, of the preferably opaque plastic compound (15) are backmoulded with a further plastic compound by injection moulding in order to form a plastic body (11).

16. Method according to Claim 15, **characterized in that** the opaque plastic compound (15) is injected by two-component injection moulding, in particular without full demoulding of the transparent body (3).

17. Method according to Claim 15 or 16, **characterized in that** a turnover-mould injection-moulding device is used for injecting the opaque plastic compound (15).

18. Method according to one of the preceding method claims, **characterized in that** the pattern (5) is put in place by application of a coating, in particular a metal coating.

19. Method according to one of the preceding method Claims 15 to 17, **characterized in that** the pattern is put in place by injection of a plastic compound which contrasts in colour with respect to the opaque material (15).

20. Method according to Claim 19, in which the pattern (5) is covered by an insert (17) before being backmoulded with the further plastic compound by injection moulding.

21. Method according to one of the preceding method claims, in which, furthermore, fastening elements are injected onto the cover, in particular as a single piece with one of the plastic compounds forming the cover.

22. Method according to one of the preceding method claims, in which the outer surface of the cover is provided with a protective coating, in particular a hard coating made of polysiloxane.

## Revendications

1. Couvercle en matière plastique (1) pour des ouvertures dans des carrosseries de véhicules, qui comporte un corps (3) en matière plastique transparente avec une surface externe à travers laquelle un motif de couleur contrastante (5) est visible, qui est appliqué sur une face arrière du corps (3) opposée à la surface externe, **caractérisé en ce que** la face arrière du corps transparent (3) formé par injection est rétroinjectée en partie ou à pleine surface, tout en évitant la surface prévue pour le motif (5) avec une masse de matière plastique (15) et **en ce qu'**un corps en matière plastique supplémentaire (11) recouvrant la région du motif (5) après application de ce dernier est fixement relié au corps formé par la masse de matière plastique (15), par injection de la matière plastique formant ce dernier.

2. Couvercle selon la revendication 1, **caractérisé en ce qu'**on injecte la masse de matière plastique (15) sous forme d'une couche sur le corps transparent et **en ce que** le corps en matière plastique supplémentaire (11) couvre le motif et au moins des régions partielles de la couche.

3. Couvercle selon la revendication 1 ou 2,
**caractérisé en ce qu'**on créé le motif (5) par revêtement de surfaces partielles du corps transparent (3) avant l'injection du corps en matière plastique supplémentaire (11).

4. Couvercle selon l'une quelconque des revendications précédentes, **caractérisé en ce qu'**on ajuste un insert (17) couvrant le motif entre le motif (5) et le corps en matière plastique supplémentaire (11) injecté.

5. Couvercle selon la revendication 1 ou 2,
**caractérisé en ce qu'**on crée le motif (5) de couleur contrastante par injection locale d'une masse de matière plastique sur le corps transparent.

6. Couvercle selon l'une quelconque des revendications précédentes, **caractérisé en ce que** la masse de matière plastique (15) est opaque.

7. Couvercle selon l'une quelconque des revendications précédentes, **caractérisé en ce que** dans la région du motif (5), la face arrière du corps transparent (3) est munie d'un relief (7', 9').

8. Couvercle selon une quelconque des revendications précédentes, dont le motif (5) est au moins un élément d'un logo commercial ou d'une désignation de type.

9. Couvercle selon l'une quelconque des revendications précédentes, **caractérisé en ce qu'**on injecte des éléments de fixation (13) sur l'un des corps en matière plastique (11) formant le couvercle, pour immobiliser le couvercle dans son environnement de montage.

10. Couvercle selon l'une quelconque des revendications précédentes, dont la surface externe (11) est réalisée en version lisse ou avec une structure en relief, en fonction des exigences de l'environnement de montage.

11. Couvercle selon l'une quelconque des revendications précédentes, dont la surface extérieure (11) est munie d'un revêtement protecteur, notamment d'un revêtement dur en polysiloxane.

12. Couvercle selon l'une quelconque des revendications précédentes, **caractérisé en ce que** le motif est fabriqué dans un matériau postluminescent ou dans un matériau contenant des particules postluminescentes.

13. Couvercle selon l'une quelconque des revendications précédentes sous forme d'un Radom transparent aux rayons électromagnétiques comme des rayons de radar.

14. Couvercle selon l'une quelconque des revendications précédentes dont le motif est en partie ou complètement un motif d'un habillage de radiateur ou d'un logo commercial d'une version standard du couvercle pour l'ouverture citée.

15. Procédé de fabrication d'un couvercle en matière plastique (1) pour des ouvertures dans des carrosseries de véhicules qui est transparent aux rayons électromagnétiques, comme des rayons de radar et qui comporte un corps (3) injecté en matière plastique transparente, à travers lequel est visible un motif (5) qui est appliqué sur une face arrière du corps (3) qui est opposée à la surface externe et par ailleurs du matériau supplémentaire de préférence opaque de couleur contrastante par rapport au motif (5) étant appliqué sur la face arrière du corps transparent (3), **caractérisé en ce qu'**on rétroinjecte en partie ou à pleine surface la face arrière du corps transparent (3) formé par injection avec une masse de matière plastique de préfèrence opaque (15) adhérant solidement sur la face arrière, tout en évitant la surface prévue pour le motif (5) et afin d'appliquer ensuite le motif (5) ou après son application, on rétroinjecte au moins les surfaces occupées par celui-ci et les surfaces de masse de matière plastique de préférence opaque (15) adjacentes à ces dernières avec une masse de matière plastique supplémentaire afin de former un corps en matière plastique (11).

16. Procédé selon la revendication 15, **caractérisé en ce qu'**on injecte la masse de matière plastique opaque (15) par procédé d'injection de bicomposantes, notamment sans démoulage complet du corps transparent (3).

17. Procédé selon la revendication 15 ou 16,
**caractérisé en ce que** pour l'injection de la masse de matière plastique opaque (15), on utilise un dispositif d'injection à moule à renversement.

18. Procédé selon l'une quelconque des revendications précédentes concernant le procédé, **caractérisé en ce qu'**on introduit le motif (5) par application d'un revêtement, notamment d'une métallisation.

19. Procédé selon l'une quelconque des revendications précédentes 15 à 17 concernant le procédé, **caractérisé en ce qu'**on introduit le motif par injection d'une masse de matière plastique de couleur contrastante par rapport au matériau opaque (15).

20. Procédé selon la revendication 19, dans lequel avant de rétroinjecter le motif (5) avec la masse de matière plastique supplémentaire, on le recouvre d'une pièce à insérer (17).

21. Procédé selon l'une quelconque des revendications précédentes, dans lequel on injecte par ailleurs sur le couvercle des éléments de fixation, notamment en monobloc avec l'une des masses de matière plastique formant le couvercle.

22. Procédé selon l'une quelconque des revendications précédentes, dans lequel on munit la surface externe du couvercle d'un revêtement protecteur, notamment d'un revêtement dur en polysiloxane.
